# EUROPÄISCHE PATENTSCHRIFT

(11) **EP 0 480 158 B1**
(45) Veröffentlichungstag und Bekanntmachung des Hinweises auf die Patenterteilung: **23.08.1995**
(21) Anmeldenummer: 91114407.9
(22) Anmeldetag: 28.08.1991
(51) Int. Cl.: A01B 39/16

(54) **Landwirtschaftliche Maschine**
Agricultural machine
Machine agricole

(30) Priorität: 08.10.1990 DE 4031858
(43) Veröffentlichungstag der Anmeldung: 15.04.1992
(73) Patentinhaber: Maschinenfabrik Bermatingen GmbH & Co., D-88697 Bermatingen (DE)
(72) Erfinder: Schautzgy, Achim, Dipl.-Ing., W-7994 Langenargen (DE)
(74) Vertreter: Engelhardt, Guido, Dipl.-Ing.

(56) Entgegenhaltungen:
- AT-B- 380 376
- AT-B- 383 002
- DE-A- 3 546 288
- DE-A- 3 906 433
- FR-A- 2 596 245
- US-A- 4 518 043

## Beschreibung

Die Erfindung bezieht sich auf eine landwirtschaftliche Maschine mit einem schwenkbar an einem Maschinenrahmen angelenkten Tragarm, an dem ein oder mehrere Bodenbearbeitungswerkzeuge, beispielsweise ein Mähbalken, Rechzinken oder dgl., angebracht sind und dem ein Fühler sowie ein mit einem beidseitig von Druckmittel beaufschlagbaren Verstellkolben versehener Hubzylinder zugeordnet ist, dem bei Betätigung des Fühlers mittels einer Steuereinrichtung Druckmittel gesteuert zuführbar ist, wobei die Steuereinrichtung aus einem in den Druckmittelzuführungsleitungen des Hubzylinders eingesetztes elektromagnetisch betätigbares 4/3-Wegeventil sowie in dessen Stromkreis angeordneten Schaltgliedern besteht, von denen das eine Schaltglied von dem Fühler und das andere Schaltglied von dem Tragarm beeinflußbar ist.

Mittels der bei dieser durch die DE-OS 39 06 433 bekannten Maschine vorgesehenen Steuereinrichtung ist es zwar möglich, den Tragarm stets in einer definierten Lage zu halten und dessen Schwenkbewegungen exakt zu steuern, in der Praxis hat sich jedoch gezeigt, daß das mit zwei einander gegenüberliegend angeordneten Elektromagneten ausgestattete Wegeventil in zu kurzen Zeiteinheiten reagiert. Durch die wechselweise schaltbaren auf das Verstellglied des Wegeventils einwirkenden Elektromagnete wird dieses nämlich in Bruchteilen von Sekunden geöffnet, der Schwenkarm wird somit oftmals ruckartig und mehrfach hintereinander verstellt. Die mechanischen Bauteile des Schwenkarmes sind daher mitunter hohen Stoßbeanspruchungen ausgesetzt, Beschädigungen und dadurch Betriebsstörungen sind vielfach die Folge.

Aufgabe der Erfindung ist es daher, eine landwirtschaftliche Maschine der vorgenannten Gattung in der Weise zu verbessern, daß diese nicht nur die Vorteile der bekannten Ausgestaltung aufweist, sondern bei der zuverlässig ruckartige Schwenkbewegungen des Schwenkarmes vermieden sind. Vielmehr soll erreicht werden, daß der Schwenkarm in Abhängigkeit von der Schwenkbewegung des Fühlers verstellt wird und daß die an der Verstellung des Schwenkarmes beteiligten Bauteile keine hohen stoßartigen Belastungen ausgesetzt sind. Der dazu erforderliche Bauaufwand soll gering gehalten werden, dennoch soll eine hohe Betriebssicherheit gewährleistet sein.

Gemäß der Erfindung wird dies dadurch erreicht, daß zur einseitig mechanischen Betätigung des Verstellgiedes des Wegeventils in Abhängigkeit von der Verschwenkbewegung des Fühlers beim Einschwenken dieser mit dem Verstellglied zwangläufig verbunden ist, derart, daß das Verstellglied proportional zu dem jeweiligen Verstellweg des Fühlers verstellbar ist.

Zur zwangläufigen Verbindung des Fühlers mit dem Verstellglied des Wegeventils kann in einfacher Ausgestaltung ein Bowdenzug vorgesehen werden, der z. B. mit seinem einen Ende an einem über die Anlenkung des Fühlers überstehenden Ansatz und mit seinem anderen Ende an einem schwenkbar gelagerten mit dem Verstellglied des Wegeventils zusammenwirkenden Hebel verbunden ist, nach andersartigen Ausführungen kann zu dem gleichen Zweck aber auch ein mechanisches oder ein hydraulisches Gestänge dienen, das unmittelbar oder über Zwischenglieder an dem Fühler und dem Verstellglied angelenkt bzw. durch diese beeinflußbar ist.

Zweckmäßig ist es des weiteren, das von dem Fühler beeinflußbare Schaltglied durch eines der zwischen dem Fühler und dem Verstellglied des Wegeventils vorgesehenen Verbindungsglieder, bei einem Bowdenzug als Verbindungsglied beispielsweise von dem auf das Verstellglied unmittelbar einwirkenden Hebel, zu betätigen, wobei es angebracht ist, zwischen dem Verstellglied des Wegeventils und dem auf dieses einwirkenden Betätigungsglied einen Freigang vorzusehen.

Vorteilhaft ist es ferner, dem Verstellglied des Wegeventils einen Elektromagnet zuzuordnen, mittels dem das Wegeventil unabhängig von der durch den Fühler beeinflußbaren Verstellung des Verstellgliedes betätigbar ist. Der Elektromagnet sollte mittels eines vorzugsweise an einem Führerstand angeordneten Wechselschalters an einen Stromkreis anschließbar sein. Das Einschwenken des Schwenkarmes kann somit von dem Fahrer der Maschine jederzeit vorgenommen werden. Angebracht ist es auch, den Schaltgliedern des Wegeventils einen Ein-/Ausschalter vorzuschalten.

Wird eine landwirtschaftliche Maschine gemäß der Erfindung ausgebildet, so ist es nicht nur möglich, die Schwenkbewegungen des Tragarmes exakt zu steuern und diesen stets in einer definierten Lage zu halten, sondern es werden zuverlässig auch hohe mechanische Beanspruchungen des Schwenkarmes vermieden. Durch die Öffnung des Wegeventils in Abhängigkeit von der jeweiligen Schwenkbewegung des Fühlers wird nämlich der Druck in dem Hubzylinder stetig und nicht schlagartig aufgebaut, ruckartige Verstellbewegungen und die dadurch bedingten stoßartigen Belastungen sind somit nahezu ausgeschlossen. Der Schwenkarm kann vielmehr langsam an ein Hindernis herangefahren werden, eine Bodenbearbeitung bis in dessen unmittelbarer Nähe ist demnach gewährleistet. Bei einfacher konstruktiver Ausgestaltung sind, zumal auch die Vorteile der bekannten Ausgestaltung gegeben sind, eine stets zuverlässige Arbeitsweise sowie ein störungsfreier Betrieb über einen langen Zeitraum gewährleistet.

In der Zeichnung ist ein Ausführungsbeispiel der gemäß der Erfindung ausgebildeten landwirtschaftlichen Maschine dargestellt, das nachfolgend im einzelnen erläutert ist. Hierbei zeigt:
- Figur 1: einen an einem Maschinenrahmen gehaltenen mittels eines Hubzylinders verschwenkbaren Tragarm
und
- Figur 2: das Schaltschema der dem Hubzylinder zugeordneten Steuereinrichtung.

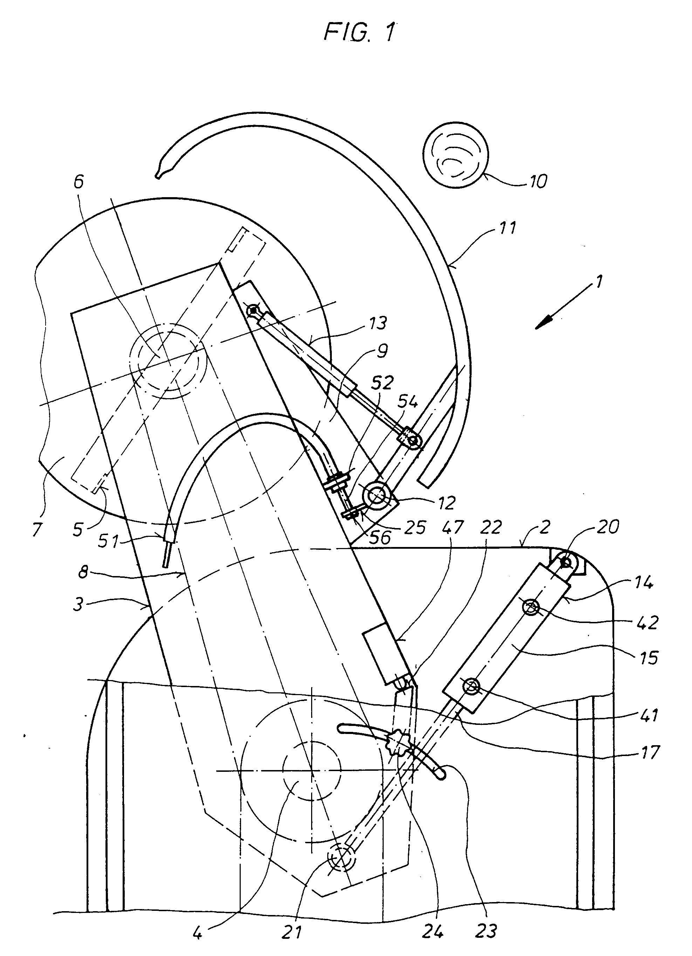

Die in Figur 1 dargestellte und mit 1 bezeichnete landwirtschaftliche Maschien besteht aus einem verfahrbaren Maschinenrahmen 2 und einem an diesem gehaltenen Tragarm 3, der begrenzt verschwenkbar auf einer Welle 4 gelagert ist und ein Bodenbearbeitungswerkzeug in Form eines Messerbalkens 5 trägt. Über einen Keilriementrieb 8 ist der auf einer Welle 6 angeordnete und durch eine Haube 7 abgedeckte Messerbalken 5 antreibbar.

An dem Tragarm 3 ist des weiteren an einer Platte 9 ein Fühler 11 angebracht, der bei einer Anlage an einem Hindernis 10, beispielsweise an einem Stamm eines Baumes, durch dieses in Richtung des Tragarmes 3 einschwenkbar ist. Der Fühler 11 ist dazu auf einer Welle 12 gelagert und zu dessen Rückführung in Ausgangslage dient eine auf diesen einwirkende Gasfeder 13, die ebenfalls an der Platte 9 abgestützt ist.

Das Ein- und Ausschwenken des Tragarmes 3 wird mittels eines Hubzylinders 14 bewerkstelligt, der einen beidseitig von Druckmittel beaufschlagbaren in einem Zylinder 15 angeordneten Verstellkolben 16 aufweist. Der Zylinder 15 ist hierbei mittels einer Welle 20 an dem Maschinenrahmen 2, die Kolbenstange 17 des Verstellkolbens 16 dagegen ebenfalls mittels einer Welle 21 an dem Tragarm 3 angelenkt, so daß dieser entsprechend der Beaufschlagung des Verstellkolbens 15 nach links oder nach rechts verschwenkbar ist.

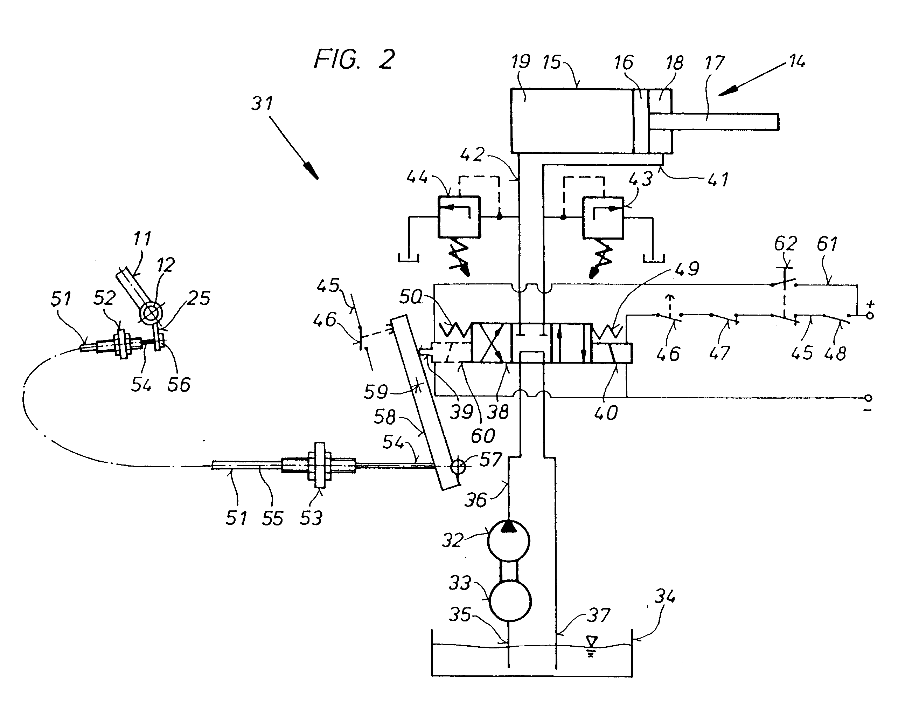

Die in Figur 2 schematisch dargestellte, dem Hubzylinder 14 zugeordnete Steuereinrichtung 31 besteht im wesentlichen aus einem 4/3-Wegeventil 38 sowie einem durch den Fühler 11 beeinflußbares Schaltglied 46 und einem durch den Tragarm 3 betätigbares Schaltglied 47, mittels denen die Druckmittelzufuhr des von einer durch einen Motor 33 z. B. dem Fahrzeugmotor antreibbaren Pumpe 32 aus einem Vorratsbehälter 34 über eine Leitung 35 geförderten Druckmittels in die Druckräume 18 und 19 des Hubzylinders 14 steuerbar ist.

Das 4/3-Wegeventil 38 ist hierbei an die Druckleitung 36 der Pumpe 32 sowie eine zu dem Vorratsbehälter 34 führende Rücklaufleitung 37 angeschlossen und ermöglicht es, die Leitungen 36 und 37 wechselweise mit Druckmittelleitungen 41 und 42 zu verbinden, die in die Druckräume 18 bzw. 19 des Hubzylinders 14 münden. Um Druckspitzen zu vermeiden, ist in die Druckleitungen 41 und 42 jeweils ein Druckbegrenzungsventil 43 bzw. 44 eingesetzt.

Das dem Tragarm 3 zugeordnete Schaltglied 47 ist ein Endschalter, der mit einem Anschlag 22 zusammenwirkt. Bei der Ausgestaltung nach Figur 1 ist der Anschlag 22 verstellbar in einer Kulisse 23 des Maschinenrahmens 2 geführt und mit Hilfe einer Spannschraube 24 arretierbar. Da durch das Schaltglied 47 und das mit diesem zusammenwirkende 4/3-Wegenventils 38 die Schwenkbewegung des Tragarmes 3 nach rechts begrenzbar ist, kann durch Verstellung des Anschlages 22 die jeweilige Arbeitsbreite der Maschine 1 eingestellt werden.

Das Wegeventil 38 ist des weiteren mit einem Elektromagneten 40 ausgestattet, der in einen Stromkreis 45 eingesetzt ist. In dem Stromkreis 45 sind auch die Schaltglieder 46 und 47 sowie ein Ein-/Ausschalter 48 angeordnet. Ferner weist das Wegeventil 38 zwei Federn 49 und 50 auf, durch die dessen Verstellglied 39 in Mittelstellung gehalten wird.

Legt sich der Fühler 11 an dem Hindernis 10 an, so wird dieser eingeschwenkt. Um infolge davon eine Verschwenkung des Tragarmes 3 vorzunehmen, die proportional der Verschwenkbewegung des Fühlers ist, ist dieser mechanisch mit dem Wegeventil 38 verbunden.

Dazu dient bei dem gezeigten Ausführungsbeispiel als Verbindungsglied ein Bowdenzug 51, dessen jeweils als Haken 56 und 57 ausgebildete Enden mit einem an dem Fühler 11 vorgesehenen Ansatz 25 und einem verschwenkbar gelagerten Hebel 58 gekoppelt sind. Die Ummantelung 55 des Zugseiles 54 des Bowdenzuges 51 ist dagegen an Haltern 52 und 53 befestigt, die auf der Platte 9 bzw. nahe dem Wegeventil 38 an dem Maschinenrahmen 2 angebracht sind.

Wird der Fühler 11 verstellt, so wird dessen Verstellbewegung über den auf einer Welle 59 verschwenkbar gelagerten Hebel 58 auf das als Stift ausgebildete Verstellglied 39 des Wegeventils 38 übertragen, die Öffnung des Wegeventils 38 und somit die Druckmittelzufuhr in den Druckraum 18 über die Druckmittelleitung 41 erfolgt demnach proportional zu der Auslenkung des Fühlers 11, Schaltstöße und dadurch bedingte Beschädigungen werden somit zuverlässig vermieden.

Bei einer Verstellung des Fühlers 11 wird aber nicht nur das Wegeventil 38 geöffnet, so daß dem Druckraum 18 des Hubzylinders 14 Druckmittel zuströmt und der Schwenkarm 3 ausgeschwenkt wird, es werden vielmehr auch die durch diese beeinflußbaren Schaltglieder 46 und 47 betätigt, und zwar wird bei einer Verstellung des Hebels 58 das Schaltglied 46 geöffnet und das als Endschalter ausgebildete Schaltglied 47 wird,sobald der Schwenkarm 3 von diesem abhebt, geschlossen. Auf diese Weise ist trotz geschlossenem Schaltglied 47 gewährleistet, daß der über den Ein-/Ausschalter 48 mit einer Stromquelle verbundene Stromkreis 45 unterbrochen ist und der Elektromagnet 40 nicht erregt werden kann. Der Schwenkarm 3 wird mittels des Hubzylinders 14 nunmehr so lange nach innen geschwenkt, bis der Fühler 11 auf den zu dessen Rückführungen die Gasfeder 13 einwirkt, wiederum seine in Figur 1 dargestellte äußerste Schwenkstellung einnehmen kann. Bei ausgeschwenktem Fühler 11 ist das von diesem beeinflußbare Schaltglied 46 geschlossen, über dieses sowie das ebenfalls geschlossene Schaltglied 47 ist somit der Elektromagnet 40 mit der Stromquelle verbunden. Das Wegeventil 38 wird dadurch aus der Mittelstellung heraus nach links verschoben, so daß der Druckraum 18 entlüftet und dem Druckraum 19 Druckmittel zugeführt wird. In dieser Schaltstellung des Wegeventils 18 wird der Schwenkarm 3 durch den Hubzylinder 14 so lange ausgeschwenkt, bis dieser an dem Schaltglied 47 zur Anlage kommt und dieses geöffnet wird. Bei Unterbrechung des Stromkreises 45 wird das Verstellglied 39 des Wegeventils 38 durch die beiden auf dieses einwirkenden Federn 49 und 50 in die Mittelstellung zurückgeführt, das von der Pumpe 32 geförderte Druckmittel fließt unmittelbar in den Vorratsbehälter 34 zurück.

Damit der Schwenkarm 3 jederzeit und kurzzeitig eingeschwenkt werden kann, und zwar auch bei ausgeschwenktem Fühler 11, ist dem Wegeventil 38 ein weiterer Elektromagnet 60 zugeordnet, der über einen mit einem Wechselschalter 62 ausgestatteten Stromkreis 61 an eine Stromquelle anschließbar ist. Wird der Wechselschalter 62 betätigt, so werden der Stromkreis 61 geschlossen und der Stromkreis 45 unterbrochen, Druckmittel kann somit über das vollständig geöffnete Wegeventil 38 in den Druckraum 18 einströmen, so daß der Schwenkarm 3 , um beispielsweise eine Beschädigung des Messerbalkens 5 durch ein niederes von dem Fühler 11 nicht erfaßbares Hindernis zu vermeiden, sofort eingeschwenkt werden kann.

## Patentansprüche

1. Landwirtschaftliche Maschine (1) mit einem schwenkbar an einem Maschinenrahmen (2) angelenkten Tragarm (3), an dem ein oder mehrere Bodenbearbeitungswerkzeuge (5), beispielsweise ein Mähbalken, Rechzinken oder dgl., angebracht sind und dem ein Fühler (11) sowie ein mit einem beidseitig von Druckmittel beaufschlagbaren Verstellkolben (16) versehener Hubzylinder (14) zugeordnet ist, dem bei Betätigung des Fühlers (11) mittels einer Steuereinrichtung (31) Druckmittel gesteuert zuführbar ist, wobei die Steuereinrichtung (31) aus einem in den Druckmittelzuführungsleitungen (36, 37) des Hubzylinders (14) eingesetztes elektromagnetisch betätigbares 4/3-Wegeventil (38) sowie in dessen Stromkreis (61) angeordneten Schaltgliedern (46, 47) besteht, von denen das eine Schaltglied (46) von dem Fühler (11) und das andere Schaltglied (47) von dem Tragarm (3) beeinflußbar ist,
**dadurch gekennzeichnet,**
daß zur einseitig mechanischen Betätigung des Verstellgiedes (39) des Wegeventils (38) in Abhängigkeit von der Verschwenkbewegung des Fühlers (11) beim Einschwenken dieser mit dem Verstellglied (39) zwangläufig verbunden ist, derart, daß das Verstellglied (39) proportional zu dem jeweiligen Verstellweg des Fühlers (11) verstellbar ist.

2. Landwirtschaftliche Maschine nach Anspruch 1,
**dadurch gekennzeichnet,**
daß zur zwangläufigen Verbindung des Fühlers (11) mit dem Verstellglied (39) des Wegeventils (38) ein Bowdenzug (51) vorgesehen ist, der z. B. mit seinem einen Ende (56) an einem über die Anlenkung (Welle 12) des Fühlers (11) überstehenden Ansatz (25) und mit seinem anderen Ende (57) an einem schwenkbar gelagerten mit dem Verstellglied (39) des Wegeventils (38) zusammenwirkenden Hebel (58) fest verbunden ist.

3. Landwirtschaftliche Maschine nach Anspruch 1,
**dadurch gekennzeichnet,**
daß zur zwangläufigen Verbindung des Fühlers (11) mit dem Verstellglied (39) des Wegeventils (38) ein mechanisches oder ein hydraulisches Gestänge vorgesehen ist, das unmittelbar oder über Zwischenglieder an dem Fühler (11) und dem Verstellglied (39) angelenkt bzw. durch diese beeinflußbar ist.

4. Landwirtschaftliche Maschine nach einem oder mehreren der Ansprüche 1 bis 3,
**dadurch gekennzeichnet,**
daß das von dem Fühler (11) beeinflußbare Schaltglied (46) durch eines der zwischen dem Fühler (11) und dem Verstellglied (39) des Wegeventils (38) vorgesehenen Verbindungsglieder, bei einem Bowdenzug (51) als Verbindungsglied, beispielsweise von dem auf das Verstellglied (39) unmittelbar einwirkenden Hebel (58), betätigbar ist.

5. Landwirtschaftliche Maschine nach Anspruch 4,
**dadurch gekennzeichnet,**
daß zwischen dem Verstellglied (39) des Wegeventils (38) und dem auf dieses einwirkenden Hebel (58) ein Freigang vorgesehen ist.

6. Landwirtschaftliche Maschine nach einem oder mehreren der Ansprüche 1 bis 5,
**dadurch gekennzeichnet,**
daß dem Verstellglied (39) des Wegeventils (38) ein Elektromagnet (60) zugeordnet ist, mittels dem das Wegeventil (38) unabhängig von der durch den Fühler (11) beeinflußbaren Verstellung des Verstellgliedes (39) betätigbar ist.

7. Landwirtschaftliche Maschine nach Anspruch 6,
**dadurch gekennzeichnet,** daß der Elektromagnet (60) mittels eines vorzugsweise an einem Führerstand angeordneten Wechselschalters (62) an einen Stromkreis (61) anschließbar ist.

8. Landwirtschaftliche Maschine nach einem oder mehreren der Ansprüche 1 bis 7,
**dadurch gekennzeichnet,**
daß den Schaltgliedern (46, 47) des Wegeventils (38) ein Ein-/ Ausschalter (48) vorgeschaltet ist.

## Claims

1. Agricultural machine (1) with a hinged carrier arm (3) mounted on a machine frame (2) and one or more ground working implements (5), for example a sickle bar, rake prong or similar, attached to the carrier arm (3) which is also allocated a sensor (11), and a stroke cylinder (14) with a moving piston (16), whereby pressurised medium can act upon both sides of the moving piston (16) and pressurised medium is supplied to the stroke cylinder (14) by means of a control device (31) on actuation of the sensor (11), and whereby the control device (31) consists of an electromagnetically actuated 4/3-way valve inserted in the pressure medium supply lines (36, 37) of the stroke cylinder (14) and of switching elements (46, 47) arranged in its circuit (61) with one switching element (46) capable of being influenced by the sensor (11) and the other switching element (47) capable of being influenced by the carrier arm (3),
**characterized in that,**
the sensor (11) is in a constrained connection with the moving element (39) in such a way that the moving element (39) can be moved in proportion to the corresponding movement path of the sensor (11) in order to act mechanically upon one side of the moving element (39) of the branch valve (38) as a function of the swivel movement of the sensor (11)when the sensor (11) swings in.

2. Agricultural machine in accordance with claim 1,
**characterized in that,**
a bowden cable (51) is provided in order to effect the constrained connection between the sensor (11) and the moving element (39) of the branch valve (38), whereby, for example, one end (56) of the bowden cable (51) is firmly connected to a lug (25) which projects beyond the hinge (shaft 12) of the sensor (11) and the other end of the bowden cable (51) is firmly connected to a lever (58) which has a swivel mounting and acts in conjunction with the moving element (39) of the branch valve (38).

3. Agricultural machine in accordance with claim 1,
**characterized in that,**
a mechanical or hydraulic linkage is provided in order to effect the constrained connection between the sensor (11) and the moving element (39) of the branch valve (38), whereby either directly or through intermediate elements, the linkage is hinge-mounted on the sensor (11) and the moving element (39) or can be influenced by them.

4. Agricultural machine in accordance with one or more of claims 1 to 3,
**characterized in that,**
the switching element (46) which can be influenced by the sensor (11) can itself be actuated by one of the connection elements located between the sensor (11) and the moving element (39) of the branch valve (38) by means of a bowden cable (51) acting as the connection element connected, for example, to the lever (58) which acts directly on the moving element (39).

5. Agricultural machine in accordance with claim 4,
**characterized in that,**
a clearance is provided between the moving element (39) of the branch valve (38) and the lever (58) which acts on the moving element (39).

6. Agricultural machine in accordance with one or more of claims 1 to 5,
**characterized in that,**
an electromagnet (60) is allocated to the moving element (39) of the branch valve (38), by means of which the branch valve (38) can be actuated independently of the movement of the moving element (39) which can be influenced by the sensor (11).

7. Agricultural machine in accordance with claim 6,
**characterized in that,**
the electromagnet (60) can be connected to a circuit (61) by means of a two-way switch (62) which, in a preferred embodiment, is mounted on a control panel.

8. Agricultural machine in accordance with one or more of claims 1 to 7,
**characterized in that,**
an on-off switch (48) is connected in series before the switching elements (46, 47) of the branch valve (38).

## Revendications

1. Machine agricole (1) avec bras support (3) pivotant sur un cadre de machine (2) portant un ou plusieurs outillages de labourage du sol (5), comme par exemple une barre de coupe, une dent-râteau etc. et auquel est assigné un palpeur (11) ainsi qu'un vérin (14) équipé d'un piston de réglage (16) soumis de part et d'autre à l'action d'un fluide sous pression, vérin qui, à l'actionnement du palpeur (11), reçoit un débit défini du fluide sous pression par un dispositif de commande (31), le dispositif de commande (31) comprenant une électrovanne à 4/3 voies (38) montée dans les conduites d'arrivée du fluide sous pression (36, 37) du vérin (14) ainsi que des organes de commutation (46, 47) disposés dans son circuit électrique (61), un organe de commutation (46) étant influencé par le palpeur (11) et l'autre (47) par le bras de support (3),
caractérisée en ce que
pour l'actionnement mécanique unilatéral du membre de réglage (39) de l'électrovanne (38) en dépendance du pivotement du palpeur (11), celui-ci soit lié rigidement, au pivotement, avec le membre de réglage (39), de sorte que le membre de réglage (39) se laisse régler proportionnellement à la course de réglage du palpeur (11).

2. Machine agricole d'après la revendication 1,
caractérisée en ce que
pour la liaison rigide du palpeur (11) avec le membre de réglage (39) de l'électrovanne (38), il soit prévu un câble Bowden (51) dont une extrémité (56) est liée par exemple à un embout (25) saillant au-delà de l'articulation (arbre 12) du palpeur (11), tandis que l'autre (57) est liée à un levier (58) pivotant et collaborant avec le membre de réglage (39) de l'électrovanne (38).

3. Machine agricole d'après la revendication 1,
caractérisée en ce que
pour la liaison rigide du palpeur (11) avec le membre de réglage (39) de l'électrovanne (38), il soit prévu une tringlerie mécanique ou hydraulique articulée soit directement soit par des organes intermédiaires, sur le palpeur (11) ou le membre de réglage (39) ou qui se laisse influencer par ceux-ci.

4. Machine agricole d'après une ou plusieurs des revendications 1 à 3,
caractérisée en ce que
l'organe de commutation (46) influencé par le palpeur (11) soit actionné par un des membres de raccordement prévus entre le palpeur (11) et le membre de réglage (39) de l'électrovanne (38), dans le cas d'un câble Bowden en tant que membre de raccordement, par exemple par un levier (58) agissant directement sur le membre de réglage (39).

5. Machine agricole d'après la revendication 4,
caractérisée en ce que
entre le membre de réglage (39) de l'électrovanne (38) et le levier (58) agissant sur celui-ci, il soit prévu un espace libre.

6. Machine agricole d'après une ou plusieurs des revendications 1 à 5,
caractérisée en ce
qu'il soit assigné au membre de réglage (39) de l'électrovanne (38) un solénoïde (60) qui permet actionner l'électrovanne (38) indépendamment du réglage du membre de réglage (39) influencé par le palpeur (11).

7. Machine agricole d'après la revendication 6,
caractérisée en ce que
le solénoïde (60) se laisse brancher sur un circuit électrique (61) au moyen d'un commutateur (62) prévu de préférence dans le poste de commande.

8. Machine agricole d'après une ou plusieurs des revendications 1 à 7,
caractérisée en ce que
les organes de commutation (46, 47) de l'électrovanne (38) soient précédés par un interrupteur (48).
